# EUROPEAN PATENT APPLICATION

(11) **EP 4 851 636 A1**
(43) Date of publication of application: **09.12.2026**
(21) Application number: 24921946.0
(22) Date of filing: 26.12.2024
(51) Int. Cl.: G01N 35/02, G01N 35/04

(54) **AUTOMATIC ANALYSIS DEVICE, METHOD FOR CONTROLLING AUTOMATIC ANALYSIS DEVICE, AND PROGRAM**

(30) Priority: 31.01.2024 JP 2024013606
(71) Applicant: Hitachi High-Tech Corporation, Minato-ku Tokyo 105-6409 (JP)
(72) Inventor: SHIOHATA, Hirobumi, Tokyo 105-6409 (JP); CHIDA, Satoru, Tokyo 105-6409 (JP); SUZUKI, Naoto, Tokyo 105-6409 (JP)
(74) Representative: MERH-IP Matias Erny Reichl Hoffmann Patentanwälte PartG mbB
(86) International application number: PCT/JP2024/046211
(87) International publication number: WO 2025/164193

(57) **Abstract**

In an automatic analyzer, a plurality of setting items can be automatically configured when a specific sample is emplaced. The automatic analyzer includes a first storage portion, a second storage portion, a third storage portion, a reader portion and a setting change portion. The first storage portion stores setting information that defines settings for the plurality of the setting items related to an analysis module. The second storage portion stores, based on each identifier, correspondence information representing a correspondence between an identifier of a transport-targeted object loaded to a transport path for sample container racks, a setting content to be assigned to the plurality of the setting items, and a priority. The reader portion reads an identifier of a transport-targeted object loaded to the transport path. The third storage portion stores an identifier read by the reader portion. The setting change portion references the correspondence information stored in the second storage portion and changes the setting information stored in the first storage portion based on the setting content corresponding to the highest prioritized identifier stored in the third storage portion.

## Description

### Technical Field

The present invention relates to an automatic analyzer, a control method for the automatic analyzer, and a program.

### Background Art

Automatic analyzers that automatically analyze the components of samples, such as blood or urine, are known. Patent Literature 1 describes that the automatic re-inspection function or the data anomaly check function is enabled or disabled when the automatic analyzer is loaded with a specific rack that holds sample containers containing samples.

### Citation List

### Patent Literature

Patent Literature 1: International Publication WO No. 2016/136390

### Summary of Invention

### Technical Problem

However, the automatic analyzer described in Patent Literature 1 is designed to switch one of the plurality of the setting items associated with the automatic analyzer. When a specific sample is emplaced into the automatic analyzer, the plurality of settings need to be fine-tuned manually, requiring complicated operations, to comply with that specific sample.

The objective of the present invention is to allow the automatic analyzer to automatically configure a plurality of setting items when the specific sample is emplaced.

### Solution to Problem

An automatic analyzer according to a representative embodiment of the present application includes a transport path for a rack that holds a sample container; an analysis module that analyzes a sample in the sample container; a first storage portion that stores setting information defining settings of the plurality of the setting items related to the analysis module; a second storage portion that stores correspondence information representing a correspondence between an identifier of a transport-targeted object loaded to the transport path, a setting content to be assigned to the setting items, and a priority, based on the identifier; a reader portion that reads an identifier of a transport-targeted object loaded to the transport path; a third storage portion that stores an identifier read by the reader portion; and a setting change portion that references the correspondence information stored in the second storage portion and changes the setting information stored in the first storage portion, based on the setting content corresponding to the highest prioritized identifier stored in the third storage portion.

### Advantageous Effects of Invention

According to a representative embodiment of the present application, when the specific sample is emplaced on the automatic analyzer, the plurality of the setting items can be automatically configured.

### Brief Description of Drawings

Fig. 1A is a diagram illustrating an automatic analyzer configuration.
Fig. 1B is a diagram illustrating an example of a hardware configuration of an overall control portion.
Fig. 2 is a diagram illustrating an example of a current system setting information table.
Fig. 3 is a diagram illustrating an example of a system setting information table at analysis operation startup.
Fig. 4 is a diagram illustrating an example of a rack information table.
Fig. 5 is a diagram illustrating a rack ID registration table.
Fig. 6 is a diagram illustrating an example of a rack ID registration screen.
Fig. 7 is a diagram illustrating an example of a rack ID confirmation screen.
Fig. 8 is a flow diagram illustrating an example of a processing flow of a setting change portion when a load portion ID reader detects a rack.
Fig. 9 is a flow diagram illustrating an example of a processing flow of a setting change portion when a rack is ejected to an ejection portion.
Fig. 10 is a diagram illustrating an example of a system setting confirmation screen.

### Description of Embodiments

### <Background to Inventors' Research>

An automatic analyzer automatically analyzes specific components contained in a sample, qualitatively or quantitatively. A sample represents a biological sample, such as a subject's blood or urine, for example.

An automatic analyzer provides various functions, such as remaining reagent management, automatic maintenance function, bubble detection function, and re-inspection function. The automatic maintenance function automatically cleans dispensing nozzles and piping, for example, periodically or upon detection of contamination. The bubble detection function determines the presence or absence of bubbles that could interfere with sample analysis, and if bubbles exist, it notifies the user that bubbles have been detected. The re-inspection function redoes a measurement or inspection if, for example, an inappropriate event or an abnormal measurement value occurs during the measurement or inspection for sample analysis, and the accuracy of the analysis results is deemed unexpected.

Generally, various functions of the automatic analyzer include the plurality of the setting items capable of detailed control over the function operations. The information representing the settings for the plurality of the setting items is also referred to as system setting information, or simply system settings. A user changes the system settings for each function according to the purpose of using the automatic analyzer.

The user changes system settings by manually manipulating the operation screen of the automatic analyzer. The automatic analyzer changes the control over each function according to the system settings. For example, the user registers, as part of the system settings, conditions for performing the automatic maintenance from the operation screen. For example, when a specific rack is emplaced into the automatic analyzer, the automatic re-inspection function or the data anomaly check function is enabled or disabled as a method of changing the system setting without using the operation screen.

However, the method of manually changing the system settings from the operation screen presents the following problems. For example, suppose the user supplies the system with a rack requiring urgent measurement (hereinafter referred to as an "emergency rack") to acquire measurement results as soon as possible. If the automatic maintenance is in process, the automatic analyzer needs to force the emergency rack into a standby condition until the automatic maintenance is complete and the measurement resumes. To temporarily disable the automatic maintenance function during the measurement of samples in the emergency rack, the user needs to manually disable the automatic maintenance function from the operation screen before the emergency rack is loaded into the automatic analyzer. After measurement of the samples in the emergency rack is complete, the user needs to manually re-enable the automatic maintenance function as needed.

Aside from the automatic maintenance, to perform measurement without sample bubble detection in a sample container placed in a specific rack, the user needs to manually disable the bubble detection function from the operation screen before that rack is loaded into the automatic analyzer. After measurement on that rack is complete, the user needs to re-enable the bubble detection function as needed.

It is presumed that system settings may be changed manually during analysis operations on the automatic analyzer. However, a user unfamiliar with the automatic analyzer may require time to change the system settings, causing delays in the rack supply. The method of changing system settings from the operation screen forces the user to attend to the automatic analyzer when racks are supplied, possibly degrading the user's work efficiency.

As described in Patent Literature 1, the method of changing system settings based on rack detection presents the following problems. The embodiment in Patent Literature 1 enables or disables one setting item in the system settings upon detection of a rack. However, system settings are associated with various functions, such as automatic maintenance and bubble detection. There may be a case of changing the settings of the plurality of the setting items in the system setting, depending on the situation.

It is difficult for users to manage racks if the plurality of the system setting items are associated with a specific rack, and the system settings are changed when that rack is detected. For example, suppose the automatic analyzer includes the plurality of the racks associated with the plurality of the setting items in the system setting. Then, it is difficult to determine which setting item is currently changed on which rack.

According to the method described in Patent Literature 1, the order of changing the settings of setting items depends on the order of mounting racks on the load portion of the automatic analyzer. There may be a case where an external transport system is connected to the load portion, or a the plurality of rack supply ports are available. In such a case, the user needs to understand and manage the order in which racks are supplied to the automatic analyzer and how the setting item settings are changed. However, such user-based management is impractical. It is practically difficult to apply this method to the automatic analyzer.

In light of these circumstances, the inventors conducted research aimed at automatically setting the plurality of the setting items when a specific sample is emplaced on an automatic analyzer, and developed the present invention.

The embodiments of the present invention will now be described. The following embodiments are merely examples for embodying the present invention and do not limit the technical scope of the present invention. In the following embodiments, components having the same functions are designated by the same reference numerals, and repeated explanations will be omitted unless necessary.

### (First Embodiment)

The automatic analyzer will be described below by referencing the drawings.

### <Automatic Analyzer Configuration>

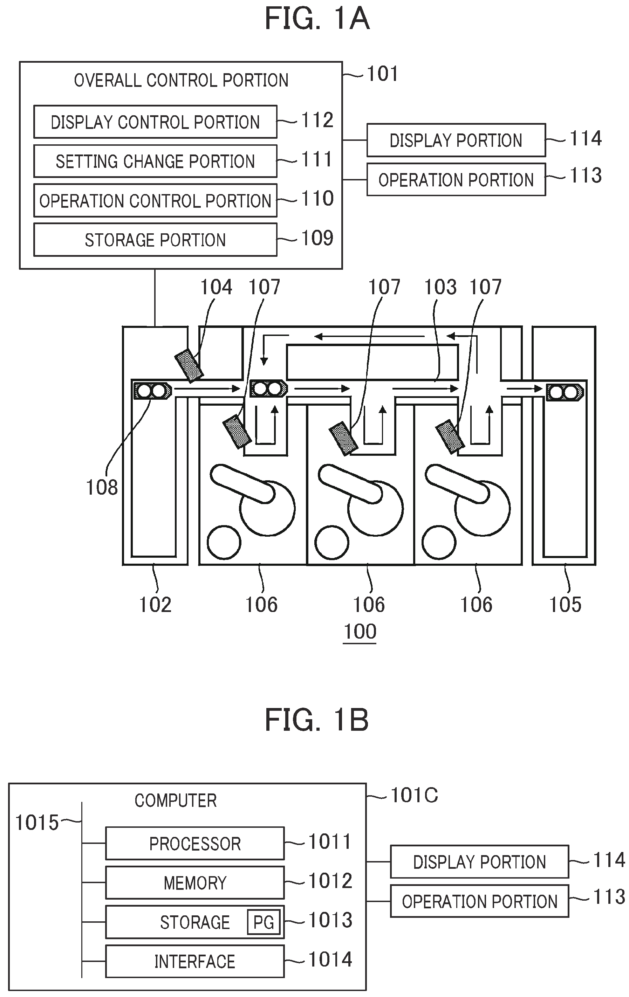

Fig. 1A is a diagram illustrating an automatic analyzer configuration. As illustrated in Fig. 1A, an automatic analyzer 100 includes an overall control portion 101, a load portion 102, a transport line 103, a load portion ID reader 104, an ejection portion 105, an analysis module 106, and an analysis module ID reader 107. The automatic analyzer 100 includes one or more analysis modules 106. According to the example, the automatic analyzer 100 includes three analysis modules 106.

The load portion 102 is where the rack 108 is loaded. The rack 108 exemplifies transport-targeted objects transported by the transport line 103 and is configured to hold sample containers. Loading of the rack 108 into the load portion 102 may be performed manually by a user or automatically by an external transport system.

The rack 108 is attached with a rack ID, serving as a rack identifier. For example, the rack 108 is attached with a label printed with a barcode or a two-dimensional code representing the rack ID. For example, the rack 108 is attached with an RF tag that stores the rack ID. The rack ID is associated with a reception number, subject name, and requested measurement item, for example, related to the sample in the sample container held by the rack 108. The requested measurement item is a measurement item requested by the analysis requester.

The transport line 103 provides a transport path for transporting transport-targeted objects such as racks 108. The rack 108 loaded to the load portion 102 is transported through the transport line 103 to the load portion ID reader 104, the analysis module 106, or the ejection portion 105, for example, as appropriate.

The load portion ID reader 104 is a device that reads the rack ID attached to the rack 108. The load portion ID reader 104 represents a barcode reader or an RFID reader, for example. The load portion ID reader 104 transmits the rack ID read from the rack 108 to the overall control portion 101. The load portion ID reader 104 exemplifies a "reader portion" in the present application.

The analysis module 106 is a device that analyzes a sample in the sample container held by the rack 108, based on operational instructions and requested measurement items received from the overall control portion 101. The analysis module 106 uses a dispensing nozzle to dispense the sample in the sample container and a reagent into a reaction container. The analysis module 106 analyzes the sample by measuring physical quantities, such as light transmittance, concerning a mixture of the sample and the reagent in the reaction container.

The analysis module ID reader 107 is a device that reads the rack ID of the rack 108 arriving at the analysis module 106. The analysis module ID reader 107 transmits the read rack ID to the overall control portion 101.

The overall control portion 101 is a device that outputs control signals to control operations on each component of the automatic analyzer 100 and performs processes related to sample analysis.

The overall control portion 101 includes a storage portion 109, an operation control portion 110, a setting change portion 111, and a display control portion 112. The storage portion 109 exemplifies a "first storage portion, " a "second storage portion, " and a "third storage portion" in the present application. The overall control portion 101 connects with an operation portion 113 and a display portion 114, for example.

Fig. 1B is a diagram illustrating an example of a hardware configuration of an overall control portion. As illustrated in Fig. 1B, the overall control portion 101 is configured as a computer 101C, for example. The computer 101C includes a processor 1011, memory 1012, a storage 1013, an interface 1014, and a communication bus 1015. The processor 1011 represents a central processing unit (CPU), a microprocessor unit (MPU), or a microcontroller unit (MCU), for example. The memory 1012 represents ROM or RAM, for example. The storage 1013 represents a solid-state drive (SSD) or a hard disk drive (HDD), for example. The interface 1014 is a device that electrically connects with external devices.

The processor 1011, the memory 1012, the storage 1013, and the interface 1014 are each connected to a communication bus 1015 to be able to transmit and receive information mutually. The memory 1012 or the storage 1013 stores a program PG. The processor 1011 reads the program PG, loads it into the memory 1012, and executes it to allow the computer 101C to function as the storage portion 109, the operation control portion 110, the setting change portion 111, and the display control portion 112. In other words, the computer 101C can execute the program PG to function as the storage portion 109, the operation control portion 110, the setting change portion 111, and the display control portion 112.

The operation portion 113 represents a keyboard or a mouse, for example. The display portion 114 represents an LCD monitor or an OLED monitor, for example. The operation portion 113 and the display portion 114 may be integrated into a touch panel.

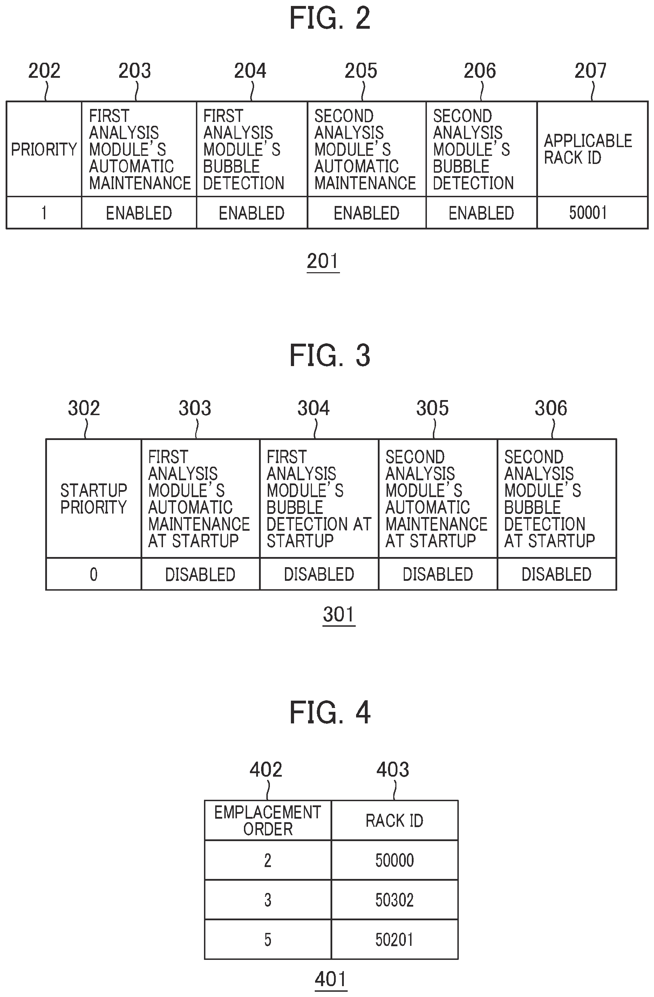

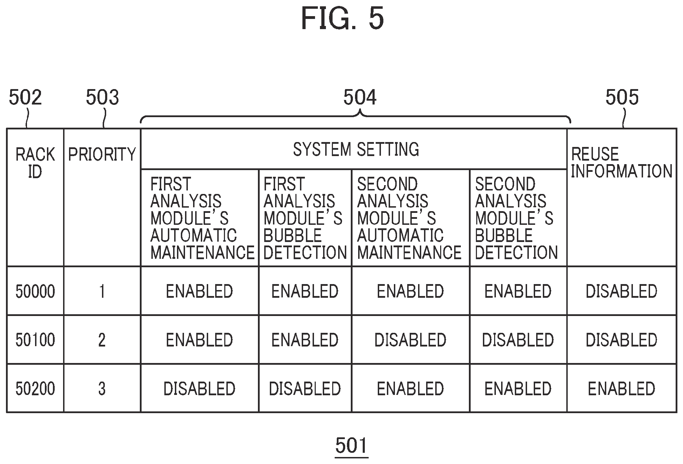

The storage portion 109 stores the current system setting information, the system setting information at the time of analysis operation startup, information on racks loaded to the automatic analyzer 100, or changes in system settings associated with rack IDs. The user's operation on the operation portion 113 previously stores the system settings at the time of analysis operation startup. The current system settings correspond to the contents of a table illustrated in Fig. 2 to be described later. The system settings at the time of analysis operation startup correspond to the contents of a table illustrated in Fig. 3 to be described later. Changes in the system settings associated with rack IDs correspond to the contents of a table illustrated in Fig. 5 to be described later.

The operation control portion 110 periodically reads the current system setting information stored in the storage portion 109 and transmits operational instructions to the analysis module 106 based on the current system setting information.

The analysis module 106 operates based on the instructions received from the operation control portion 110. For example, when the current system setting "enables" the automatic maintenance and bubble detection functions, the analysis module 106 performs automatic maintenance and bubble detection. When the current system setting "disables" the automatic maintenance and bubble detection functions, the analysis module 106 does not perform automatic maintenance and bubble detection. When a function setting is changed from "enabled" to "disabled" in the system setting while the corresponding function is in process, the operation associated with the function is interrupted, if possible. For example, the automatic maintenance function is interruptible. The bubble detection function is uninterruptible.

When the load portion ID reader 104 reads a rack ID, the setting change portion 111 acquires correspondence information that is stored in the storage portion 109 and is associated with the read rack ID. Then, the setting change portion 111 changes the current system setting information based on the system setting changes included in the acquired correspondence information.

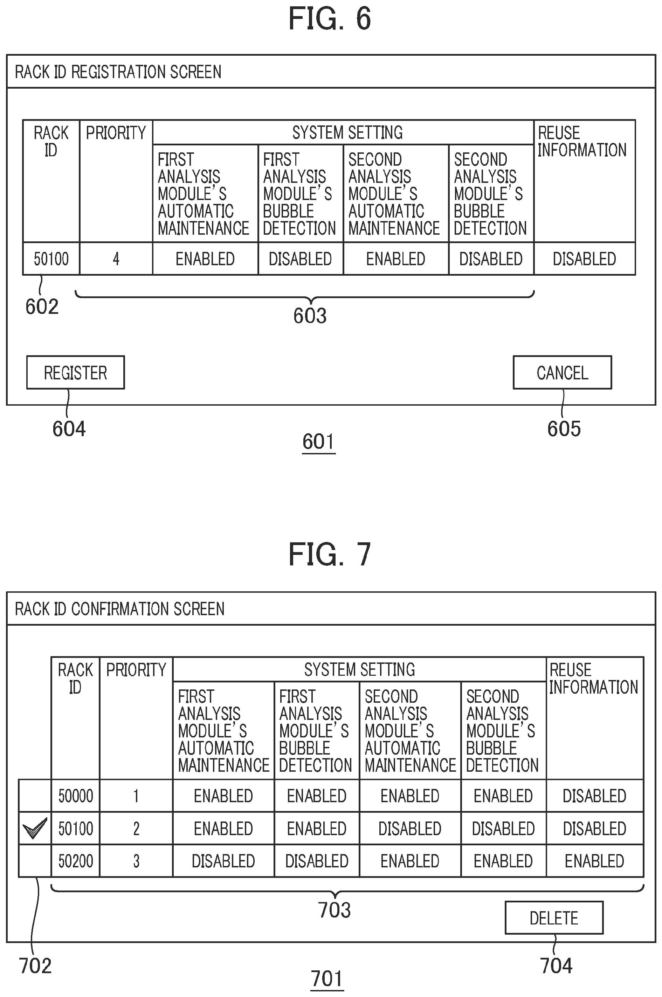

The display control portion 112 configures a graphical user interface (GUI) in cooperation with the operation portion 113 and the display portion 114. The display control portion 112 allows the display portion 114 to display a rack ID registration screen (corresponding to a screen illustrated in Fig. 6 described later) in response to the user's operation on the operation portion 113, for example. The user can use the rack ID registration screen to register a rack ID and information associated with any or intended system settings. The display control portion 112 allows the display portion 114 to display a rack ID confirmation screen (corresponding to a screen illustrated in Fig. 7 described later) in response to the user's operation on the operation portion 113, for example. The user can confirm or delete registered information using the rack ID confirmation screen.

Fig. 2 is a diagram illustrating an example of a current system setting information table. The storage portion 109 stores a current system setting information table 201. The current system setting information table 201 stores information that defines the current system settings. As illustrated in Fig. 2, the current system setting information table 201 includes such items as a priority 202, a first analysis module's automatic maintenance setting 203, a first analysis module's bubble detection setting 204, a second analysis module's automatic maintenance setting 205, a second analysis module's bubble detection setting 206, and an applicable rack ID 207. The first analysis module corresponds to one of the three analysis modules 106, and the second analysis module corresponds to another thereof.

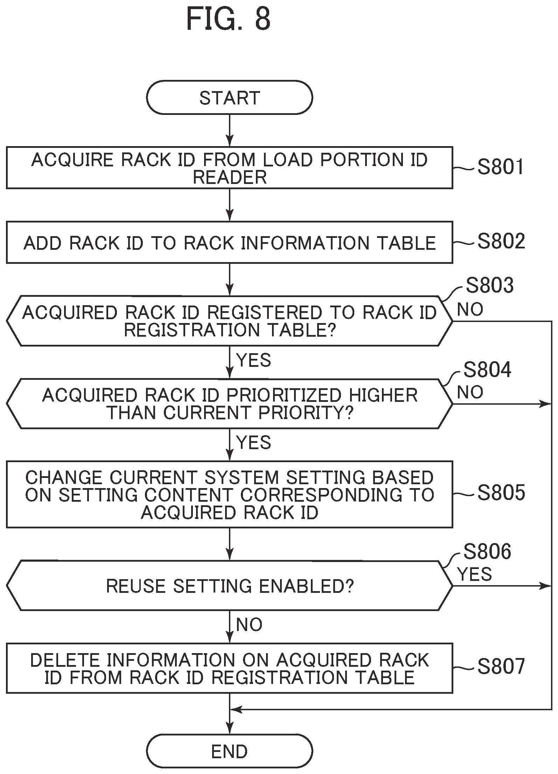

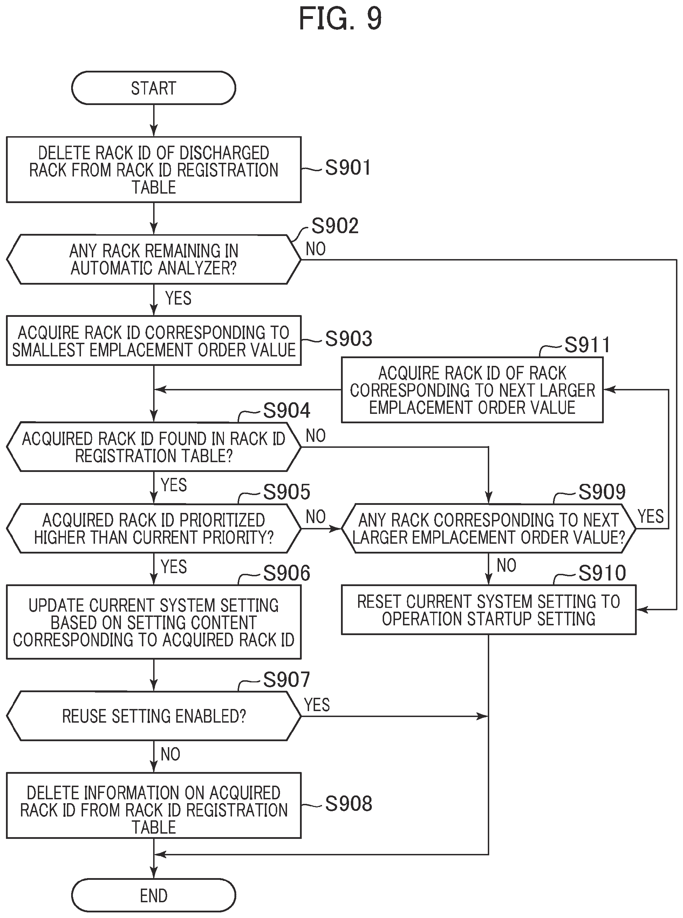

The item, priority 202, stores the priority of the current system setting. A larger value for the priority 202 is deemed to indicate a higher priority. The priority 202 is used for a rack detection process (a process flow illustrated in Fig. 8) and a rack ejection process (a process flow illustrated in Fig. 9), which are described below.

The items, such as the first analysis module's automatic maintenance setting 203, the first analysis module's bubble detection setting 204, the second analysis module's automatic maintenance setting 205, and the second analysis module's bubble detection setting 206, are "enabled" or "disabled." The "disabled" function is disabled during the sample analysis and does not operate.

The item, applicable rack ID 207, stores the rack ID that triggered a change in the system settings. "None" is stored as an initial value when the automatic analyzer 100 starts an analysis operation.

The present embodiment uses the automatic maintenance and bubble detection functions as the system settings. The system settings include not only the automatic maintenance and bubble detection functions to be enabled or disabled, but also the presence or absence of transport system connection and the analysis module mask information, which temporarily disables analysis module operations.

Fig. 3 is a diagram illustrating an example of a system setting information table at analysis operation startup. The storage portion 109 stores a system setting information table at analysis operation startup 301. The system setting information table at analysis operation startup 301 stores information representing the system settings to be set when an analysis operation starts. As illustrated in Fig. 3, the system setting information table at analysis operation startup 301 includes such items as a startup priority 302, a first analysis module's automatic maintenance setting at startup 303, a first analysis module's bubble detection setting at startup 304, a second analysis module's automatic maintenance setting at startup 305, and a second analysis module's bubble detection setting at startup 306, when an analysis operation starts.

When the analysis operation starts, the overall control portion 101 stores the information in the system setting information table at analysis operation startup 301 in the current system setting information table 201. The item, startup priority 302, stores "0" as the smallest priority value.

Fig. 4 is a diagram illustrating an example of a rack information table. The storage portion 109 stores a rack information table 401. The rack information table 401 stores information on racks loaded to the automatic analyzer 100. As illustrated in Fig. 4, the rack information table 401 includes such items as an emplacement order 402 and a rack ID 403. The item, emplacement order 402, stores the order in which the corresponding rack was emplaced during operation. The rack information table 401 is used for a rack detection process (a process flow illustrated in Fig. 8) and a rack ejection process (a process flow illustrated in Fig. 9), which are described below.

Fig. 5 is a diagram illustrating an example of a rack ID registration table. The storage portion 109 stores a rack ID registration table 501. The rack ID registration table 501 stores information representing the changes to be made to the system settings associated with the rack ID. As illustrated in Fig. 5, the rack ID registration table 501 includes such items as a rack ID 502, a priority 503, system setting information 504, and reuse information 505.

The item, rack ID 502, stores a rack ID. The item, priority 503, stores the priority of applying the system settings. The priority 503 is used for a rack detection process (a process flow illustrated in Fig. 8) and a rack ejection process (a process flow illustrated in Fig. 9), which are described below.

The item, system setting information 504, stores information representing how the current system setting information table 201 should be changed when the load portion ID reader 104 detects a rack ID. According to the present embodiment, suppose the load portion ID reader 104 detects the rack ID: 50100, for example. Then, the rack ID registration table 501 stores information enabling the automatic maintenance and bubble detection functions for the first analysis module and disabling the automatic maintenance and bubble detection functions for the second analysis module.

The item, reuse information 505, stores information indicating whether the system settings should be changed with the same setting information when the user resupplies a previously ejected rack to the automatic analyzer 100. Namely, if the same rack ID is read again after an analysis operation begins, it is determined whether the relevant rack ID can be reused based on the reuse information 505.

For example, suppose the rack 108 with rack ID: 50100 is ejected from the automatic analyzer 100, and then the user resupplies the rack 108 with rack ID: 50100 to the automatic analyzer. In this case, the item, reuse information 505, for the rack ID: 50100 is "disabled," and the system setting information remains unchanged. On the other hand, suppose the user resupplies the rack 108 with the rack ID: 50200 to the automatic analyzer 100. In this case, the item, reuse information 505, for the rack ID: 50100 is "enabled," and the system setting information changed again.

Fig. 6 is a diagram illustrating an example of a rack ID registration screen. A rack ID registration screen 601 is used to register the system setting information associated with a rack ID. As illustrated in Fig. 6, the rack ID registration screen 601 includes a rack ID input column 602, a system setting input column 603, a registration button 604, and a cancel button 605. The user inputs a rack ID, intended for registration, into the rack ID input column 602 and the corresponding system settings into the system setting input column 603. The user then presses the registration button 604 to store the input information in the rack ID registration table 501. The user can cancel partially input information by pressing the cancel button 605.

Fig. 7 is a diagram illustrating an example of a rack ID confirmation screen. A rack ID confirmation screen 701 is used to confirm or delete the information stored in the rack ID registration table 501. As illustrated in Fig. 7, the rack ID confirmation screen 701 includes a check box 702, a rack ID registration list 703, and a delete button 704. The rack ID confirmation screen 701 displays the information from the rack ID registration table 501 in the rack ID registration list 703. Using the rack ID registration list 703, the user can confirm the currently registered rack IDs. The user can select a rack ID using the check box 702 and press the delete button 704 to delete the selected rack ID and its associated information from the rack ID registration table 501.

Fig. 8 is a flow diagram illustrating an example of a processing flow of a setting change portion when a load portion ID reader detects a rack. The process starts from step S801.

In step S801, the load portion ID reader 104 detects a rack and reads the rack ID of that rack, and then the setting change portion 111 acquires the rack ID read from the load portion ID reader 104. Then, the process proceeds to step S802.

In step S802, the setting change portion 111 adds the acquired rack ID to the rack information table 401. Then, the process proceeds to step S803. The emplacement order 402 for the rack ID 403 to be added is determined by incrementing the maximum emplacement order 402 already registered in the rack information table 401 by one. For example, suppose the rack ID: 50001 is added to the rack information table 401. Then, the emplacement order 402 for the rack ID: 50001 stores "6" because the maximum value of the already registered emplacement order 402 value is "5."

In step S803, the setting change portion 111 determines whether the acquired rack ID is registered in the rack ID registration table 501. If it is determined that the acquired rack ID is registered in the rack ID registration table 501 (S803: YES), the process proceeds to step S804. If it is determined that the acquired rack ID is not registered (S303: NO), the process terminates.

In step S804, the setting change portion 111 compares the priority 202 in the current system setting information table 201 with the priority 503 in the rack ID registration table 501. The setting change portion 111 determines whether the priority 503 corresponding to the acquired rack ID is higher than the priority 202 in the current system setting information table 201, namely, whether the value of priority 503 is greater than the value of priority 202. If it is determined that the value of priority 503 corresponding to the acquired rack ID is greater than the current value of priority 202 (S804: YES), the process proceeds to step S805. If the value of priority 503 corresponding to the acquired rack ID is smaller than the current priority 202 (S804: NO), the process terminates.

In step 805, the setting change portion 111 changes the priority 202 and each system setting in the current system setting information table 201 based on the priority 503 and the contents of the system setting information 504 corresponding to the acquired rack ID. In the case of the rack ID: 50100, for example, the priority is "2." The functions of the first analysis module's automatic maintenance and the first analysis module's bubble detection are "enabled." The functions of the second analysis module's automatic maintenance and the second analysis module's bubble detection are "disabled." Consequently, the value of priority 202 in the current system setting information table 201 is changed to "2." The functions of the first analysis module's automatic maintenance setting 203 and the first analysis module's bubble detection setting 204 are changed to "enabled." The functions of the second analysis module's automatic maintenance setting 205 and the second analysis module's bubble detection setting 206 are changed to "disabled." The applicable rack ID 207 is updated to "50100." After step S805 is performed, the process proceeds to step S806.

In step S806, the setting change portion 111 determines whether the reuse setting for the acquired rack ID is "enabled" or "disabled" based on the reuse information 505 corresponding to the acquired rack ID. If the reuse setting for the acquired rack ID is determined to be "enabled" (S806: YES), the process terminates. If the reuse setting for the acquired rack ID is determined to be "disabled" (S806: NO), the process proceeds to step S807. In the case of the rack ID: 50200, for example, the reuse information 505 is "enabled, " and the process terminates. In the case of the rack ID: 50100, for example, the reuse information 505 is "disabled, " and the process proceeds to step S807.

In step S807, the setting change portion 111 deletes the acquired rack ID information from the rack ID registration table 501. In principle, deletion of the rack ID information acquired from the rack ID registration table 501 prevents the system settings, stored in the current system setting information table 201, from being changed even if the same rack or a rack with the same rack ID is detected again. After step S807 is performed, the process terminates.

Fig. 9 is a flow diagram illustrating an example of a processing flow of a setting change portion when a rack is ejected to an ejection portion. When a rack is ejected, the present embodiment determines whether the system settings should be restored to the settings at the start of operation or updated with the system settings corresponding to the remaining racks. The process starts from step S901.

In step S901, the setting change portion 111 deletes the rack ID of the ejected rack 108 from the rack information table 401. Then, the process proceeds to step S902.

In step S902, the setting change portion 111 confirms the rack information table 401 and determines whether any racks 108 remain in the automatic analyzer 100. If one or more rack IDs are registered in the rack information table 401, the setting change portion 111 determines that any racks 108 remain. If no rack IDs are registered, the setting change portion 111 determines that no rack 108 remains. If it is determined that the rack 108 remains (S902: YES), the process proceeds to step S903. On the other hand, if it is determined that the rack 108 does not remain (S902: NO), the process proceeds to step S910.

In step S903, the setting change portion 111 acquires the rack ID corresponding to the smallest value of emplacement order 402 in the rack information table 401. Then, the process proceeds to step S904. In the case of the rack information table 401 illustrated in Fig. 4, for example, the smallest value of emplacement order 402 is "2" corresponding to the rack ID: 50000. Therefore, the rack ID: 50000 is acquired.

In step S904, the setting change portion 111 determines whether the rack ID, acquired in the most recent step, is registered in the rack ID registration table 501. If it is determined that the acquired rack ID is registered in the rack ID registration table 501 (904: YES), the process proceeds to step 905. If it is determined that the acquired rack ID is not registered in the rack ID registration table 501 (S904: NO), the process proceeds to step S909.

In step S905, the setting change portion 111 compares the priority in the current system settings with the priority corresponding to the most recently acquired rack ID. Namely, the setting change portion 111 compares the priority 202 in the current system setting information table 201 with the priority 503 in the rack ID registration table 501 corresponding to the rack ID acquired in step S904. The setting change portion 111 determines whether the value of priority 503 corresponding to the most recently acquired rack ID is greater than the value of priority 202 in the current system setting information table 201.

If it is determined that the value of priority 503 corresponding to the most recently acquired rack ID is greater than the value of priority 202 in the current system setting information table 201, representing the current system setting (S905: YES), the process proceeds to step S906. On the other hand, if it is determined that the value of priority 503 corresponding to the most recently acquired rack ID is smaller than the value of priority 202 in the current system setting (S905: NO), the process proceeds to step S909.

In step S906, the setting change portion 111 updates the current system settings with the setting information corresponding to the acquired rack ID. Therefore, the setting change portion 111 changes the setting contents of the priority 202, each system setting, and the applicable rack ID 207 in the current system setting information table 201 based on the setting information on the priority 503 and the system setting information 504 corresponding to the most recently acquired rack ID. Then, the process proceeds to step S907.

In step S907, the setting change portion 111 determines whether the reuse setting for the most recently acquired rack ID is "enabled" or "disabled" based on the reuse information 505 corresponding to the most recently acquired rack ID. If the reuse setting for the most recently acquired rack ID is determined to be "enabled" (S907: YES), the process terminates. On the other hand, if it is determined that the reuse setting for the most recently acquired rack ID is "disabled" (S907: NO), the process proceeds to step S908.

In step S908, the setting change portion 111 deletes the information on the most recently acquired rack ID from the rack ID registration table 501. Then, the process terminates.

In step S909, the setting change portion 111 references the rack information table 401 and determines whether there is a rack whose emplacement order value is the second largest after the emplacement order value of the rack corresponding to the most recently acquired rack ID. If it is determined that there is a rack whose emplacement order value is second largest (S909: YES), the process proceeds to step S911. On the other hand, if it is determined that there is not a rack whose emplacement order value is second largest (S909: NO), the process proceeds to step S911.

For example, suppose the rack information table 401 registers the information illustrated in Fig. 4, and the rack ID: 50000 is acquired most recently. Then, the value of emplacement order 402 for the rack ID: 50000 is "2." The rack information table 401 registers the rack ID: 50302, whose emplacement order value is the next larger "3." Therefore, in this case, the process proceeds to step 911.

In step S910, the setting change portion 111 restores the current system settings to the settings at the start of the operation. The setting change portion 111 changes the current system setting information table 201 and each system setting based on the information in the system setting information table at analysis operation startup 301. Then, the rack information table 401 may register no rack IDs whose priorities are higher than those in the current system settings. In such a case, the process in step S910 restores the current system settings to the settings at the start of operation. In other words, if there are no remaining racks whose priorities are higher than those in the current system settings, the setting change portion 111 restores the system settings to those at the start of operation.

In step 911, the setting change portion 111 references the rack information table 401 and acquires a rack ID associated with the emplacement order value that is the second largest after the emplacement order value corresponding to the most recently acquired rack ID. For example, the information illustrated in Fig. 4 is registered in the rack information table 401, and the rack ID: 50000 is acquired most recently. The value of emplacement order 402 for the rack ID: 50000 is "2." Then, the rack ID: 50302 is acquired because its emplacement order value is the next larger "3."

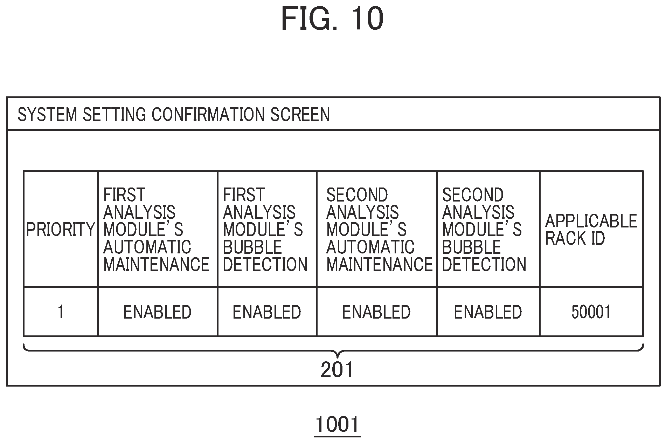

Fig. 10 is a diagram illustrating an example of a system setting confirmation screen. As illustrated in Fig. 10, a system setting confirmation screen 1001 displays the information in the current system setting information table 201. The system setting confirmation screen 1001 allows the user to confirm which priority corresponds to the currently applied system settings, or which rack triggered a change in the system settings, for example.

According to the first embodiment, the automatic analyzer 100 automatically changes the system settings according to the supplied racks. The user can eliminate the need to manually change the system settings according to the racks. Racks can be prioritized, allowing the user to change the system settings according to the supplied racks without needing to consider the order in which the racks were supplied. The user does not need to manage the order in which the racks are supplied to the automatic analyzer 100. It is possible to reduce the cases of forcing the user to attend to the automatic analyzer, and improve the user's work efficiency.

According to the first embodiment, in the automatic analyzer 100, the plurality of the setting items can be automatically configured when the specific sample is emplaced. If an emergency rack is loaded to the automatic analyzer 100, for example, the system settings can be automatically changed to those appropriate for analyzing samples in the emergency rack. When the emergency rack is ejected from the automatic analyzer 100, the system settings are automatically restored to low-prioritized settings or to the settings at the start of the analysis operation, simplifying the system setting management.

### <Modification 1>

The conditions on changing the system settings of the automatic analyzer 100 may include not only "the acquired rack ID is registered to the rack ID registration table 501" and "the acquired rack ID is prioritized higher than the current system setting," but also information representing the position at which the rack was detected or the rack ID was acquired, as a combination.

For example, a column of "location to have acquired the rack ID" can be added to the rack ID registration table 501. When the load portion ID reader 104 or each analysis module ID reader 107 detects a rack, the information on the position where the rack was detected is transmitted to the setting change portion 111. The setting change portion 111 changes the system settings only if all of the following conditions are satisfied: "the acquired rack ID is registered to the rack ID registration table 501", "the acquired rack ID is prioritized higher than the current system settings", and "the location to have acquired the rack ID matches."

The system settings can be more flexibly changed by adding "location to have detected a rack" or "location to have detected a rack ID" to the conditions when changing the system settings.

### <Modification 2>

The rack ID that triggers a change in the system settings of the automatic analyzer 100 can be transported along the transport line 103 and may be provided for a structure different from the rack 108. For example, this structure is, so to speak, a pseudo rack that does not function to accommodate the rack 108 but is shaped to imitate the rack 108. For example, the load portion 102 may load a pseudo rack provided with a rack ID, as well as the rack 108 holding a sample container for samples to be analyzed based on the system settings associated with that rack ID.

According to the present modification, the pseudo rack loaded to the automatic analyzer 100 can change the system settings of the automatic analyzer 100 to those previously associated with the rack ID of the pseudo rack. For example, suppose an emergency pseudo rack is available, having a rack ID previously associated with emergency settings, and there is a need to urgently analyze a sample in a short time as an interrupt. In this case, the automatic analyzer 100 can automatically switch to emergency settings by loading the original rack holding the sample container containing the urgent sample as well as the emergency pseudo rack onto the automatic analyzer simultaneously. In this case, it is possible to eliminate cumbersome operations, such as replacing the original rack with an emergency rack for holding the sample container to contain the sample, or manually changing the settings of the automatic analyzer 100.

### <Modification 3>

The system setting information may enable or disable a re-inspection function concerning the analysis module 106. The re-inspection function redoes a measurement when an analysis results in unexpected accuracy due to the occurrence of an inappropriate event or an abnormal measurement value during the measurement for sample analysis, for example.

The present modification can disable the re-inspection function as the setting corresponding to a specific rack ID, and effectively achieve sample analysis results in a short time without running a risk of degrading the accuracy of sample analysis results. This is particularly effective when there is a need to load an urgent sample to the automatic analyzer 100 as an interrupt, for example.

### (Second Embodiment)

One of the embodiments also includes a control method for the automatic analyzer. For example, the automatic analyzer includes: a transport path for a rack holding a sample container; an analysis module for analyzing a sample in the sample container; a first storage portion that stores setting information defining settings of the plurality of the setting items concerning the analysis module; and a second storage portion that stores, based on each identifier, correspondence information representing a correspondence between an identifier of a transport-targeted object loaded to the rack transport path, a setting content to be assigned to the plurality of the setting items, and a priority. The control method for such an automatic analyzer includes: a storage step of reading an identifier of a transport-targeted object loaded to the transport path and storing the read identifier in a third storage portion; and a change step of referencing the correspondence information stored in the second storage portion and changing the setting information stored in the first storage portion based on the setting content corresponding to the highest prioritized identifier stored in the third storage portion.

### (Third Embodiment)

One of the embodiments also includes: a program that allows a computer or a processor included in the automatic analyzer to perform a process of steps configuring the control method; a program that allows a computer to function as the storage portion and the setting change portion according to the first embodiment; and a non-transitory tangible storage medium that stores such a program. Effects similar to those of the first embodiment can also be acquired by allowing a computer or a processor to execute the program according to the third embodiment.

While the embodiments and their modifications of the present invention have been described, the invention is not limited to these embodiments and modifications. The components or their functions may be modified without departing from the spirit and scope of the invention. The plurality of the components disclosed in the above embodiments may be combined as appropriate. Furthermore, some components may be deleted from all of the components described in the above embodiments.

### List of Reference Signs

100: automatic analyzer
101: overall control portion
102: load portion
103: transport line
104: load portion ID reader
105: ejection portion
106: analysis module
107: analysis module ID reader
108: rack
109: storage portion
110: operation control portion
111: setting change portion
112: display control portion
113: operation portion
114: display portion
101C: computer
1011: processor
1012: memory
1013: storage
1014: interface
1015: communication bus
201: current system setting information table
202: priority
203: first analysis module's automatic maintenance setting
204: first analysis module's bubble detection setting
205: second analysis module's automatic maintenance setting
206: second analysis module's bubble detection setting
207: applicable rack ID
301: system setting information table at analysis operation startup
302: startup priority
303: first analysis module's automatic maintenance setting at startup
304: first analysis module's bubble detection setting at startup
305: second analysis module's automatic maintenance setting at startup
306: second analysis module's bubble detection setting at startup
401: rack information table
402: emplacement order
403: rack ID
501: rack ID registration table
502: rack ID
503: priority
504: system setting information
505: reuse information
601: rack ID registration screen
602: rack ID input column
603: system setting input column
604: registration button
605: cancel button
701: rack ID confirmation screen
702: check box
703: rack ID registration list
704: delete button
1001: system setting confirmation screen

## Claims

1. An automatic analyzer comprising:
a transport path for a rack that holds a sample container;
an analysis module that analyzes a sample in the sample container;
a first storage portion that stores setting information defining settings of a plurality of setting items related to the analysis module;
a second storage portion that stores correspondence information representing a correspondence between an identifier of a transport-targeted object loaded to the transport path, a setting content to be assigned to the setting items, and a priority, based on the identifier;
a reader portion that reads an identifier of a transport-targeted object loaded to the transport path;
a third storage portion that stores an identifier read by the reader portion; and
a setting change portion that references the correspondence information stored in the second storage portion and changes the setting information stored in the first storage portion, based on the setting content corresponding to the highest prioritized identifier stored in the third storage portion.

2. The automatic analyzer according to claim 1,
wherein the setting change portion deletes information on the identifier of the transport-targeted object, ejected from the automatic analyzer, from the third storage portion.

3. The automatic analyzer according to claim 1,
wherein a plurality of the setting items includes a setting item related to at least one of functions such as automatic maintenance, bubble detection, and re-inspection in the analysis module.

4. The automatic analyzer according to claim 3,
wherein the setting content includes whether the function is set to be enabled or disabled.

5. The automatic analyzer according to claim 1,
wherein the correspondence information includes reuse information indicating whether the read identifier can be reused when the setting information is changed; and
wherein, when the reader portion rereads the same identifier after the analysis operation begins, the setting change portion determines whether the identifier can be reused, based on the reuse information on the identifier.

6. The automatic analyzer according to claim 1,
wherein the transport-targeted object is comparable to the rack.

7. The automatic analyzer according to claim 1,
wherein the transport-targeted object is a structure different from the rack.

8. A control method of an automatic analyzer that includes a transport path for a rack that holds a sample container; an analysis module that analyzes a sample in the sample container; a first storage portion that stores setting information defining settings of a plurality of setting items related to the analysis module; and a second storage portion that stores correspondence information representing a correspondence between an identifier of a transport-targeted object loaded to the transport path, a setting content to be assigned to the setting items, and a priority, based on the identifier, the method comprising the steps of:
reading an identifier of a transport-targeted object loaded to the transport path and storing the read identifier in a third storage portion; and referencing the correspondence information stored in the second storage portion, and
changing the setting information stored in the first storage portion, based on the setting content corresponding to the highest prioritized identifier stored in the third storage portion.

9. The control method of an automatic analyzer according to claim 8, comprising:
deleting information on the identifier of the transport-targeted object, ejected from the automatic analyzer, from the third storage portion.

10. The control method of an automatic analyzer according to claim 8,
wherein a plurality of the setting items includes a setting item related to at least one of functions such as automatic maintenance, bubble detection, and re-inspection in the analysis module.

11. The control method of an automatic analyzer according to claim 10,
wherein the setting content includes whether the function is set to be enabled or disabled.

12. The control method of an automatic analyzer according to claim 8, comprising:
when the same identifier is reread after an analysis operation begins, determining whether the identifier can be reused, based on reuse information on the identifier,
wherein the reuse information is included in the correspondence information and indicates whether the read identifier can be reused when the setting information is changed.

13. The control method of an automatic analyzer according to claim 8,
wherein the transport-targeted object is comparable to the rack.

14. The control method of an automatic analyzer according to claim 8,
wherein the transport-targeted object is a structure different from the rack.

15. A program to be executed by a computer or processor included in an automatic analyzer including a transport path for a rack that holds a sample container; an analysis module that analyzes a sample in the sample container; a first storage portion that stores setting information defining settings of a plurality of setting items related to the analysis module; a second storage portion that stores correspondence information representing a correspondence between an identifier of a transport-targeted object loaded to the transport path, a setting content to be assigned to the setting items, and a priority, based on the identifier,
wherein the program allows the computer or processor to perform a storage step of reading an identifier of a transport-targeted object loaded to the transport path and storing the read identifier in a third storage portion; and
a change step of referencing the correspondence information stored in the second storage portion, and changing the setting information stored in the first storage portion, based on the setting content corresponding to the highest prioritized identifier stored in the third storage portion.
